# EUROPÄISCHE PATENTSCHRIFT

(11) **EP 2 834 136 B1**
(45) Veröffentlichungstag und Bekanntmachung des Hinweises auf die Patenterteilung: **28.12.2016**
(21) Anmeldenummer: 13712485.5
(22) Anmeldetag: 23.03.2013
(51) Int. Cl.: B62D 29/00

(54) **VERBINDUNGSANORDNUNG VON STRUKTUREINHEITEN UND VERFAHREN ZUM VERBINDEN VON STRUKTUREINHEITEN**
CONNECTING ARRANGEMENT OF STRUCTURAL UNITS AND METHOD FOR CONNECTING STRUCTURAL UNITS
DISPOSITIF D'ASSEMBLAGE D'UNITÉS STRUCTURALES ET PROCÉDÉ POUR ASSEMBLER DES UNITÉS STRUCTURALES

(30) Priorität: 04.04.2012 DE 102012006824
(43) Veröffentlichungstag der Anmeldung: 11.02.2015
(73) Patentinhaber: Audi AG, 85045 Ingolstadt (DE)
(72) Erfinder: JÄSCHKE, Anja, 92339 Beilngries (DE)
(74) Vertreter: Patzelt, Heike Anna Maria
(86) Internationale Anmeldenummer: PCT/EP2013/000881
(87) Internationale Veröffentlichungsnummer: WO 2013/149706

(56) Entgegenhaltungen:
- EP-A2- 1 759 959
- DE-A1-102009 049 313
- US-A1- 2008 217 960
- US-A1- 2010 270 846

## Beschreibung

Die Erfindung betrifft ein Verfahren zum Verbinden von Struktureinheiten gemäß dem Oberbegriff des Patentanspruchs 1 und eine Verbindungsanordnung von zwei Struktureinheiten für eine Karosserie gemäß dem Oberbegriff des Patentanspruchs 10. Gattungsgemäße Verfahren zum Verbinden von zwei Struktureinheiten für eine Karosserie sind in zahlreichen Variationen bekannt. Derartige Verfahren werden zur Erhöhung der Steifigkeit und zur Reduzierung des Gewichts einer Karosserie, insbesondere bei einer Leichtbaukarosserie, an verschiedenen Stellen in Kraftfahrzeugen angewandt. Zur Herstellung der Verbindungsanordnung von zwei Struktureinheiten werden insbesondere leichte Werkstoffe in vielfältigen Bauformen eingesetzt, welche auf Grund einer hohen Torsionssteifigkeit und damit einer sehr hohen gewichtsspezifischen Energieaufnahme hervorragend zur Aufnahme von Crashenergie in Kraftfahrzeugen geeignet sind. Als zusätzliches Versteifungselement wird ein Füllstoff und/oder ein schäumbares Kunstharz in die Struktureinheiten eingebracht, wobei der Füllstoff bzw. das Kunstharz die Struktureinheiten mit den angrenzenden Bauteilen verbindet.

Aus der DE 10 2009 049 313 A1 ist beispielsweise eine Verbindungsanordnung von zwei Struktureinheiten für eine Karosserie eines Fahrzeugs bekannt, welche jeweils eine als Hohlprofil ausgebildete Trägereinheit mit einem in der Trägereinheit angeordneten Verstärkungselement umfassen. Das Verstärkungselement wird mit Strukturschaum mit der korrespondierenden Trägereinheit verbunden, wobei die Verstärkungselemente der beiden Struktureinheiten jeweils mit einem Fügeabschnitt ausgebildet sind und über diesen Fügeabschnitt miteinander gefügt werden. Die mit Strukturschaum verbundenen Bauteile sind in ihrer Lage endgültig fixiert.

Die Aufgabe der Erfindung ist es, ein Verfahren zum Verbinden von Struktureinheiten und eine Verbindungsanordnung von zwei Struktureinheiten für eine Karosserie eines Fahrzeugs bereitzustellen, welche mit einfachen und kostengünstigen Mitteln eine spannungsfreie Versteifung einer Trägereinheit des Fahrzeugs ermöglichen.

Erfindungsgemäß wird die Aufgabe durch Bereitstellung eines Verfahrens zum Verbinden von Struktureinheiten mit den Merkmalen des Patentanspruchs 1 und einer Verbindungsanordnung von zwei Struktureinheiten für eine Karosserie eines Fahrzeugs mit den Merkmalen des Patentanspruchs 10 gelöst. Vorteilhafte Ausführungsformen und Weiterbildungen der Erfindung sind in den abhängigen Ansprüchen angegeben.

Um ein Verfahren zum Verbinden von Struktureinheiten und eine Verbindungsanordnung von zwei Struktureinheiten für eine Karosserie eines Fahrzeugs bereitzustellen, welche mit einfachen und kostengünstigen Mitteln eine spannungsfreie Versteifung einer Trägereinheit des Fahrzeugs ermöglichen, wird erfindungsgemäß vorgeschlagen, dass die zu verbindenden Struktureinheiten ausgerichtet und die Verstärkungselemente in den Trägereinheiten vor einer Wärmebehandlung der Struktureinheiten vorfixiert und nach der Wärmebehandlung durch Schäumen und/oder Kleben endgültig fixiert werden. In vorteilhafter Weise ermöglicht das erfindungsgemäße Verfahren, dass die zu verbindenden Struktureinheiten und die Verstärkungselemente in den Trägereinheiten nach ihrer Montage und nach einer Wärmebehandlung exakt zueinander ausgerichtet und in ihrer ausgerichteten Lage festgelegt bzw. endgültig fixiert werden können. Dadurch wird erreicht, dass die Trägereinheiten in den Struktureinheiten in einer optimalen und definierten Position zueinander festgelegt bzw. fixiert werden, so dass sie die zu übertragenden Kräfte gut aufnehmen und verteilen bzw. weiterleiten können. Dies ist erforderlich, um die Funktion der Struktureinheiten zu gewährleisten und ein Wegknicken der vorzugsweise skelettartigen Trägereinheiten bzw. der Verstärkungselemente zu verhindern. Mit dem erfindungsgemäßen Verfahren kann eine exakte Ausrichtung und eine Fixierung der Struktureinheiten und der Verstärkungselemente in den Trägereinheiten realisiert werden, da die Relativbewegungen der Bauteile nach einer Wärmebehandlung berücksichtigt werden können. Die erfindungsgemäße sichere Verbindung der Struktureinheiten mit der Tragstruktur der Fahrzeugkarosserie kann gezielt die Steifigkeit der Karosserie des Fahrzeugs verbessern und auch Druckbelastungen widerstehen, welche nicht ideal senkrecht auf die Struktureinheiten wirken und somit zu Momenten und Druckkräften führen können. Dadurch kann eine sehr gute Aufnahme von Crashenergie in Fahrzeugen gewährleistet werden. Ein weiterer Vorteil des Verfahrens besteht darin, dass die erfindungsgemäße Struktureinheit sehr leicht, aber dennoch verwindungssteif ausgeführt werden und einen großen Teil der am Fahrzeug wirkenden Crashenergie absorbieren kann, da sie eine hohe spezifische Energieaufnahmefähigkeit aufweisen kann. Indem die Struktureinheiten erfindungsgemäß die Steifigkeit der Tragstruktur des Fahrzeugs verbessert, können die Anforderungen an den Werkstoff und die Festigkeit der Tragstruktur an den jeweiligen Anwendungsfall angepasst werden.

In vorteilhafter Ausgestaltung des erfindungsgemäßen Verfahrens kann die Vorfixierung als mechanische Verhakung und/oder chemische Verbindung ausgeführt werden. Dadurch können die zu verbindenden Bauteile in vorteilhafter Weise in einer bestimmten Position kostengünstig vormontiert und festgelegt werden. So kann beispielsweise ein chemisches Mittel großflächig aufgebracht werden und/oder in die miteinander zu befestigenden Bauteile können konstruktiv mechanische Befestigungsmittel integriert werden. In beiden Fällen kann eine schnelle und kostengünstige Vorfixierung bzw. Vormontage eines entsprechend ausgestatteten Karosserieteils des Fahrzeugs erfolgen. Eine derartige Vorfixierung der Bauteile ermöglicht innerhalb geschlossener Profile oder zwischen zwei Bauteilen in vorteilhafter Weise geringe Relativbewegungen, welche auf Grund der Wärmebehandlung zwangsläufig auftreten können. Durch Verzicht auf separate mechanische Befestigungselemente bzw. durch Verwendung eines leichten chemischen Mittels werden unter Beibehaltung des Fahrzeuggewichts nur sehr geringe Materialkosten und Herstellungskosten verursacht.

In weiterer vorteilhafter Ausgestaltung des erfindungsgemäßen Verfahrens können durch die Wärmebehandlung Eigenspannungen in den Struktureinheiten abgebaut werden. Die Eigenspannungen in den Bauteilen können bei der Fixierung und Wärmebehandlung zu Verzug führen, so dass Maßungenauigkeiten in der Karosserie auftreten können. Des Weiteren können durch den Verzug bei der Endmontage Nacharbeiten, wie beispielsweise Montage weiterer Bauteile, Toleranzausgleich usw., erforderlich werden, wodurch hohe Kosten und lange Montagezeiten verursacht werden. Durch die Vorfixierung und anschließende Wärmebehandlung zum Abbau der Eigenspannungen in den Bauteilen ermöglichen Ausführungsformen des erfindungsgemäßen Verfahrens in vorteilhafter Weise einen weitestgehend spannungsfreien Zusammenbau der Bauteile, so dass Nacharbeiten vermieden werden können. Die in der Vormontage eingesetzten Montagemittel können eine Entstehung von Eigenspannungen bei der Montage vermeiden. Da sowohl die mechanische Verhakung als auch die chemische Verbindung in Form von Klebstoffen nur geringe Eigenspannungen verursachen, können die in den metallischen Werkstoffen auf Grund geringer Toleranzen verbleibenden Eigenspannungen durch die Wärmebehandlung in vorteilhafter Weise wirkungsvoll abgebaut werden. Spannungsfrei montierte Bauteile können eine hohe Lebensdauer aufweisen.

In weiterer vorteilhafter Ausgestaltung des erfindungsgemäßen Verfahrens können die Trägereinheit und/oder die Verstärkungselemente der Struktureinheiten aus unterschiedlichen Werkstoffen und/oder unterschiedlichen Werkstoffkombinationen hergestellt werden. Dadurch kann in vorteilhafter Weise eine Vereinfachung der Verbindungstechnik bei Mischbau ermöglicht werden, insbesondere von Struktureinheiten aus unterschiedlichen Werkstoffen und/oder unterschiedlichen Werkstoffkombinationen, wodurch ein leichtes Bauteil im Sinne eines Leichtbaugedankens mit unterschiedlichen Festigkeitseigenschaften konzipiert werden kann. Dadurch können die Steifigkeit bzw. die spezifische Energieaufnahmefähigkeit der Struktureinheiten gezielt konstruktiv auf einen Crashfall abgestimmt werden und das Crashverhalten der Tragstruktur oder eines Abschnitts der Tragstruktur des Kraftfahrzeugs positiv beeinflusst werden. Ein weiterer Vorteil des erfindungsgemäßen Verfahrens besteht darin, dass der Einsatz unterschiedlicher Werkstoffe und/oder unterschiedlicher Werkstoffkombinationen optimal für komplizierte Struktureinheiten und Knotengeometrien geeignet ist und dadurch die Tragstruktur des Kraftfahrzeugs kostengünstig versteift werden kann.

In weiterer vorteilhafter Ausgestaltung des erfindungsgemäßen Verfahrens weisen die Werkstoffe und/oder die Werkstoffkombinationen unterschiedliche Wärmeausdehnungskoeffizienten auf. Die stark voneinander differierenden Wärmeausdehnungskoeffizienten können zu mechanischen Spannungen führen, die in vorteilhafter Weise konstruktiv berücksichtigt und positiv genutzt werden können. Die thermischen Eigenschaften eines zwischen zwei Bauteilen positionierten Bauteils kann beispielsweise gezielt zur Lagepositionierung des Bauteils eingesetzt werden. Dadurch, dass die temperaturbedingte Längenänderung eines Bauteils bei der Wärmebehandlung durch eine Anpassung der Ausgangslänge des Bauteils ausgeglichen werden kann, können beispielsweise Bauteile mit erheblich voneinander abweichenden Wärmeausdehnungskoeffizienten, wie zum Beispiel Aluminium und faserverstärkte Kunststoffe problemlos zusammengefügt werden. Alternativ ist es möglich Bauteile einer Struktureinheit zu fügen, welche zwar im Wesentlichen identische Wärmeausdehnungskoeffizienten aufweisen, bei denen die thermisch induzierten Längenänderungen jedoch im Wesentlichen in unterschiedliche Richtungen wirken, indem die Längenänderungen der Bauteile konstruktiv kompensiert werden, um die Entstehung von mechanischen Spannungen zu vermeiden.

In weiterer vorteilhafter Ausgestaltung des erfindungsgemäßen Verfahrens können die Werkstoffe und/oder Werkstoffkombinationen aus Metallen und/oder Nichtmetallen bestehen, wie beispielsweise aus kohlenstofffaserverstärkten Kunststoffen, Faserkunststoffverbunden oder Aluminium. Dadurch kann in vorteilhafter Weise ein extrem leichtes Bauteil mit unterschiedlichen Festigkeitseigenschaften entstehen, welches somit ganz im Sinne eines Leichtbaugedankens konzipierbar ist, wobei der Strukturschaum als Barriere zwischen den Strukturbauteilen mit unterschiedlichen Werkstoffen und/oder unterschiedlichen Werkstoffkombinationen dienen kann. Dadurch können zwischen den Bauteilen der Struktureinheit in vorteilhafter Weise eine Kontaktkorrosion wirkungsvoll vermieden und eine lastfalloptimierte Struktureinheit hergestellt werden.

Vorzugsweise kann die Wärmebehandlung als Aushärtungsvorgang einer kathodischen Tauchlackierung ausgeführt werden. Dadurch können sich nach der anschließenden Trocknung in vorteilhafter Weise besonders gute Bedingungen für die Anhaftung des eingebrachten Strukturschaums ergeben. Insbesondere können mit diesem Verfahren im montierten Zustand die mit komplizierten Strukturen und Hohlräumen ausgebildeten Oberflächen der Struktureinheiten in großen Stückzahlen wirtschaftlich behandelt werden und so einen optimalen Korrosionsschutz erhalten. Die kathodische Tauchlackierung eignet sich optimal für derartige Tragstrukturen des Kraftfahrzeugs, da diese bei einer Temperatur von ca. 185°C automatisiert und umweltfreundlich lackiert werden können. Ein weiterer Vorteil der kathodischen Tauchlackierung besteht in der gleichmäßigen Beschichtung von Metalloberflächen und Hohlräumen mit gleichmäßigen Schichtdicken und guten Oberflächenqualitäten.

In weiterer vorteilhafter Ausgestaltung des erfindungsgemäßen Verfahrens kann mindestens ein Verstärkungselement der Struktureinheiten mindestens eine Versteifungsrippe aufweisen. Dadurch kann die Struktureinheit in vorteilhafter Weise verwindungssteif und dennoch besonders leicht ausgeführt werden, wodurch Druckkräfte großflächig auf angrenzende Bauteilflächen verteilt und übertragen werden können. Die Versteifungsrippe kann uneben oder plan ausgebildet sein und dadurch besonders gut erhöhte Druckbelastungen absorbieren. Ein weiterer Vorteil der Erfindung besteht darin, dass durch eine variable Gestaltung der Geometrie der Versteifungsrippe, insbesondere durch eine zielgerichtete und/oder ungleiche Materialdicke der Versteifungsrippe, eine definierte Einstellung der Belastbarkeit der Struktureinheit sowie der gesamten Energieabsorptionsfähigkeit möglich ist. Ein weiterer Vorteil ist die große Oberfläche der versteifungsrippenaufweisenden Struktureinheit, wodurch nach der Einbringung des Strukturschaums eine hohe Torsionssteifigkeit der ausgeschäumten Struktureinheit erzielt werden kann.

In weiterer vorteilhafter Ausgestaltung des erfindungsgemäßen Verfahrens können die Verstärkungselemente über den Strukturschaum und/oder den Klebstoff formschlüssig und/oder kraftschlüssig und/oder stoffschlüssig mit der korrespondierenden Trägereinheit verbunden werden. Dadurch sind zum Verbinden der Verstärkungselemente mit der korrespondierenden Trägereinheit in vorteilhafter Weise keine aufwändigen Montageschritte oder kostenintensive Verbindungsverfahren erforderlich, so dass die Materialkosten und Montagekosten reduziert werden können. Somit können mehrere komplizierte Bauteile der Struktureinheiten in schwer zugängigen Bereichen bzw. Knotenpunkten schnell auf eine einfache und kostengünstige Weise wirtschaftlich miteinander verbunden und versteift werden. Die Aufgabe des Strukturschaums und/oder des Klebstoffs besteht darin, vorzugsweise ein Verstärkungselement bzw. eine Struktureinheit in einer Trägereinheit zu positionieren bzw. in seiner Lage zu fixieren, um die Trägereinheit zu versteifen. Derart großflächig ausgeschäumte Struktureinheiten bzw. Tragstrukturen eines Kraftfahrzeugs können eine besonders hohe Torsionssteifigkeit mit geringen Steifigkeitssprüngen aufweisen und hoch belastbar ausgeführt werden. Der Strukturschaum bzw. der Klebstoff können ein hohes Schubmodul bei gleichzeitig geringem spezifischen Gewicht aufweisen. Zudem kann der Strukturschaum verhindern, dass zwischen den Werkstoffen der miteinander verbundenen Bauteile eine elektrochemische Reaktion stattfindet, welche zu Korrosion führen kann. Dadurch kann die Steifigkeit und die Qualität der Fahrzeugkarosserie effektiv verbessert werden.

Des Weiteren wird eine Verbindungsanordnung von zwei Struktureinheiten für eine Karosserie eines Fahrzeugs vorgeschlagen, welche jeweils mindestens eine als Hohlprofil ausgebildete Trägereinheit mit mindestens einem in der Trägereinheit angeordneten Verstärkungselement umfassen, wobei das jeweilige Verstärkungselement mit Strukturschaum mit der korrespondierenden Trägereinheit verbunden ist, und wobei die Verstärkungselemente der beiden Struktureinheiten jeweils mit einem Fügeabschnitt ausgebildet und miteinander gefügt sind. Die zu verbindenden mindestens zwei Struktureinheiten werden ausgerichtet und die Verstärkungselemente in den Trägereinheiten werden vor einer Wärmebehandlung der Struktureinheiten vorfixiert und nach der Wärmebehandlung durch Schäumen und/oder Kleben endgültig fixiert. Dadurch ergibt sich bei einer kostengünstigen Herstellung der Bauteile eine verwindungssteife und leichte Struktureinheit, welche in vorteilhafter Weise in unterschiedlichen Bereichen der Fahrzeugkarosserie eingesetzt werden kann, da sie mit weiteren Struktureinheiten verbindbar und in unterschiedlichen Größen herstellbar ist.

In vorteilhafter Ausgestaltung der erfindungsgemäßen Verbindungsanordnung kann die Trägereinheit zumindest teilweise als geschlossenes Hohlprofil ausgeführt werden. Dadurch kann in vorteilhafter Weise eine weitere Verbesserung der Steifigkeit und der Belastbarkeit der erfindungsgemäßen Trägereinheit ohne Zugabe von zusätzlichem Material erreicht werden. Vorzugsweise kann die Trägereinheit neben dem geringen Gewicht und der hohen Steifigkeit den Vorteil einer verbesserten spezifischen Energieaufnahmefähigkeit aufweisen. Auf Grund der erfindungsgemäßen Ausgestaltung der Trägereinheit kann die auf die Trägereinheit wirkende Aufprallenergie kontrolliert absorbiert und insbesondere die Energieaufnahmefähigkeit der erfindungsgemäßen Trägereinheit auf eine einfache und kostengünstige Weise wesentlich verbessert werden.

In weiterer vorteilhafter Ausgestaltung der erfindungsgemäßen Verbindungsanordnung kann die Vorfixierung durch einen Klebstoff mit hoher Dehnung auf Kautschukbasis erfolgen, welcher die unterschiedlichen Längenausdehnungen der Materialien in vorteilhafter Weise schadlos übersteht. Da zur Vorfixierung der Bauteile der Klebstoff nur in geringen Mengen eingesetzt werden kann, kann das Fertigungsverfahren wesentlich vereinfacht und verbessert werden. Neben einer sicheren Verbindung und einer präzisen Montage der Struktureinheit können die Montagekosten deutlich gesenkt werden. Da zur Vorfixierung der Struktureinheit der Klebstoff nur über einzelne Punkte oder über eine kurze Strecke mit einer kleinen Fläche erfolgt, verbleibt ein ausreichend großer Spalt zwischen der Struktureinheit und den angrenzenden Bauteilen, so dass eine Oberflächenbehandlung bzw. Lackierung oder Ausschäumung in den Hohlräumen gezielt stattfinden kann, wodurch die Struktureinheit nach der Wärmebehandlung besonders einfach endgültig in ihrer Position fixiert werden kann.

In weiterer vorteilhafter Ausgestaltung der erfindungsgemäßen Verbindungsanordnung kann ein PUR-Strukturschaum als Strukturschaum eingesetzt werden. Dadurch kann in vorteilhafter Weise zwischen der Struktureinheit und der Tragstruktur der Fahrzeugkarosserie eine stabile und dauerhafte Verbindung gewährleistet werden, wobei der Strukturschaum optisch nicht in Erscheinung tritt. Zudem kann der Strukturschaum ein Eindringen von Feuchtigkeit verhindern und die zwischen der Struktureinheit und der Tragstruktur der Fahrzeugkarosserie wirkenden Relativbewegungen wirkungsvoll dämpfen.

Vorteilhafte Ausführungsformen der Erfindung sind in der Zeichnung dargestellt und werden nachfolgend beschrieben. Einander entsprechende Bauteile sind in den einzelnen Figuren durchweg mit gleichen Bezugsziffern gekennzeichnet. Von gleichen Bauteilen in einer Figur ist nur jeweils ein Bauteil gekennzeichnet.

### Dabei zeigen:

- Fig. 1: eine partielle Schnittdarstellung eines Hohlprofil eines Türflügels eines Fahrzeugs mit einem Ausführungsbeispiel einer erfindungsgemäßen Verbindungsanordnung von mehrerer Struktureinheiten, welche mit Strukturschaum miteinander verbunden sind,
- Fig. 2: eine detailliertere Schnittdarstellung der erfindungswesentlichen Teile aus Fig. 1,
- Fig.3: eine perspektivische Darstellung eines weiteren Ausführungsbeispiels einer erfindungsgemäßen Verbindungsanordnung mit einer Struktureinheit, bestehend aus einer Trägereinheit, einem Verstärkungselement und Strukturschaum,
- Fig.4: eine perspektivische Darstellung der erfindungsgemäßen Verbindungsanordnung aus Fig. 3 ohne Verstärkungselement,
- Fig. 5: eine perspektivische Darstellung eines ersten Ausführungsbeispiels des Verstärkungselements für die erfindungsgemäße Verbindungsanordnung aus Fig. 3,
- Fig. 6: eine Schnittdarstellung des Verstärkungselements für die erfindungsgemäße Verbindungsanordnung aus Fig. 5, und
- Fig.7: eine Schnittdarstellung eines zweiten Ausführungsbeispiels eines Verstärkungselements für die erfindungsgemäße Verbindungsanordnung.

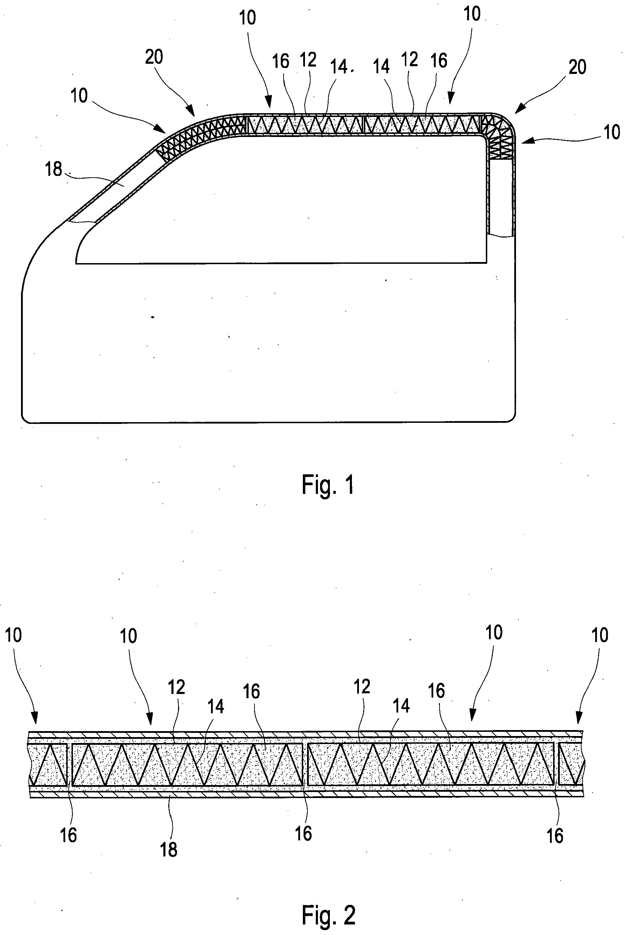

Wie aus Fig. 1 ersichtlich ist, umfasst das dargestellte Ausführungsbeispiel einer erfindungsgemäßen Verbindungsanordnung mindestens zwei Struktureinheiten 10 für eine Karosserie eines Fahrzeugs. Die mindestens zwei Struktureinheiten 10 umfassen jeweils mindestens eine als Hohlprofil ausgebildete Trägereinheit 12 und mindestens ein in der Trägereinheit 12 angeordnetes Verstärkungselement 14. Das jeweilige Verstärkungselement 14 ist mit Strukturschaum 16 mit der korrespondierenden Trägereinheit 12 verbunden, wobei die Verstärkungselemente 14 der beiden Struktureinheiten 10 jeweils mit einem Fügeabschnitt ausgebildet und miteinander gefügt sind.

Um eine erfindungsgemäße Verbindungsanordnung von zwei Struktureinheiten 10 für eine Karosserie bereitzustellen, welche mit einfachen und kostengünstigen Mitteln eine spannungsfreie Versteifung einer Trägereinheit 12 des Kraftfahrzeugs ermöglicht, wird erfindungsgemäß vorgeschlagen, dass die zu verbindenden Struktureinheiten 10 ausgerichtet und die Verstärkungselemente 14 in den Trägereinheiten 12 vor einer Wärmebehandlung der Struktureinheiten 10 vorfixiert und nach der Wärmebehandlung durch Schäumen und/oder Kleben endgültig fixiert werden.

Wie aus Fig. 1 und 2 weiter ersichtlich ist, sind im vorliegenden Ausführungsbeispiel vier erfindungsgemäße Struktureinheiten 10 in einem Türholm 18 einer Fahrzeugtür eingebaut. In dem geraden Abschnitt des als Hohlprofil ausgebildeten Türholms 18 sind zwei identische Struktureinheiten 10 angeordnet, welche jeweils von einer in einem Eckbereich 20 bzw. Knotenpunkt angeordneten Struktureinheit 10 umgeben sind. Die Geometrie und die Ausführungsform der Struktureinheiten 10 können an die Einbaugeometrie mit einer definierten Steifigkeit angepasst werden, wodurch sowohl die Trägereinheit 12 als auch die in der Trägereinheit 12 angeordneten Verstärkungselemente 14 unterschiedlich ausgeführt sein können. Zwischen den Struktureinheiten 10 können die freien Zwischenräume des als Hohlprofil ausgebildeten Türholms 18 teilweise oder vollständig mit Strukturschaum 16 ausgeschäumt werden, wodurch die Struktureinheiten 10 untereinander und mit der Innenflächen des Hohlprofils des Türholms 18 verbunden werden können und somit eine zusätzliche mechanische Aussteifung des Türholms 18 erreicht werden kann.

In einem weiteren hier nicht dargestellten Ausführungsbeispiel kann eine Struktureinheit oder können mehrere Struktureinheiten durch Schäumen und/oder Kleben endgültig miteinander verbunden und zwischen Bauteilen einer Tragstruktur des Kraftfahrzeugs vorzugsweise über zumindest eine Versteifungsrippe des Verstärkungselements mit der Tragstruktur des Kraftfahrzeugs verbunden werden.

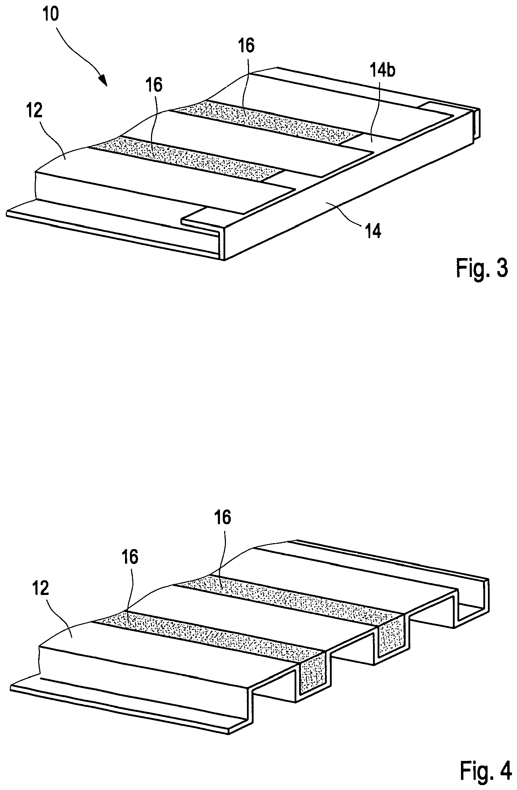

Wie aus Fig. 3 ersichtlich ist, ist die Trägereinheit 12 im dargestellten Ausführungsbeispiel zumindest teilweise als geschlossenes Hohlprofil ausgeführt, wobei die Trägereinheiten 12 als ein hohlraumaufweisendes rechteckförmiges Profil ausgeführt ist. Selbstverständlich sind auch andere einem Fachmann als sinnvoll erscheinende Ausführungsformen des Profils der Trägereinheiten 12 denkbar.

Wie aus Fig. 3 bis 7 weiter ersichtlich ist, sind die dargestellten Verstärkungselemente 14, 14' vorzugsweise U-förmig ausgebildet und weisen sich gegenüberliegende Versteifungsrippen 14a, 14b auf, welche zueinander versetzt angeordnet sind, wodurch ein torsionssteifer Körper mit einer hohen Festigkeit hergestellt werden kann. Die Versteifungsrippen 14a, 14b vergrößern die Anbindungsfläche des Verstärkungselements 14, 14' an die Trägereinheit 12. Das Verstärkungselement 14, 14' wird an mindestens einer Stirnseite der Trägereinheit 12 befestigt, indem die Versteifungsrippen 14a, 14b des Verstärkungselements 14 eine Stirnseite der Trägereinheit 12 umgreifen und dadurch die offenen Profilbereiche der Trägereinheit 12 abschließen. Nach der endgültigen Anbindung des Verstärkungselements 14, 14' an der Trägereinheit 12 durch Ausschäumen und/oder Kleben entsteht ein torsionssteifes Bauteil.

Wie aus Fig. 3 und 4 weiter ersichtlich ist, können die offenen Hohlräume des Profils der Trägereinheiten 12 als zusätzliche mechanische Aussteifung der Struktureinheit 10 teilweise oder vollständig mit Strukturschaum 16 ausgeschäumt werden. Um die Verbindung der Trägereinheit 12 mit dem Strukturschaum 16 und das Gewicht der Trägereinheit 12 zu optimieren, kann die Trägereinheit 12 ganz oder teilweise Lochungen und/oder eine oberflächenvergrößernde Struktur aufweisen.

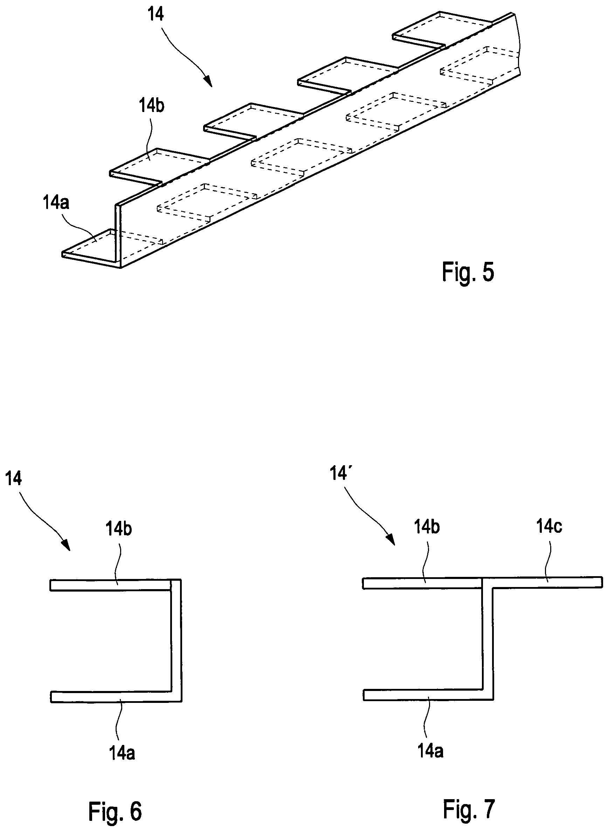

Wie aus Fig. 7 weiter ersichtlich ist, weist eine alternative Ausführungsform des Verstärkungselement 14' eine zusätzliche Versteifungsrippe 14c auf, über welche eine Anbindung der Struktureinheit 10 an eine Tragstruktur des Kraftfahrzeugs erfolgen kann.

Die Struktureinheiten 10 werden nach einem erfindungsgemäßen Verfahren hergestellt. Die zu verbindenden mindestens zwei Struktureinheiten 10 für eine Karosserie eines Fahrzeugs umfassen jeweils mindestens eine als Hohlprofil ausgebildete Trägereinheit 12 mit mindestens einem in der Trägereinheit 12 angeordneten Verstärkungselement 14, 14', wobei das jeweilige Verstärkungselement 14, 14' mit Strukturschaum 16 mit der korrespondierenden Trägereinheit 12 verbunden wird, und wobei die Verstärkungselemente 14, 14' der beiden Struktureinheiten 10 jeweils mit einem Fügeabschnitt ausgebildet und miteinander gefügt werden. Erfindungsgemäß werden die zu verbindenden Struktureinheiten 10 ausgerichtet und die Verstärkungselemente 14, 14' in den Trägereinheiten 12 werden vor einer Wärmebehandlung der Struktureinheiten 10 vorfixiert und nach der Wärmebehandlung durch Schäumen und/oder Kleben endgültig fixiert.

Damit die Struktureinheit 10 in der gewünschten Position festgelegt werden kann, erfolgt vor der Wärmebehandlung in einem ersten Schritt eine Vorfixierung durch einen Klebstoff mit hoher Dehnung auf Kautschukbasis, welcher die unterschiedlichen Längenausdehnungen der Materialien schadlos übersteht. Alternativ kann die Struktureinheit 10 in der gewünschten Position auch durch mechanische Befestigungsmittel vorfixiert werden, welche in der Struktureinheit 10 und dem korrespondierenden Befestigungspartner vorgesehen sein können, wodurch eine mechanische Arretierung bzw. Verrastung erfolgen kann. Nach der Wärmebehandlung wird in einem anschließenden zweiten Schritt die in ihrer Position vorfixierte bzw. mechanisch verrastete Struktureinheit 10 und das die Struktureinheit 10 aufnehmende Bauteil vollständig ausgeschäumt.

In vorteilhafter Weise wird die Vorfixierung als eine mechanische Verhakung oder eine chemische Verbindung ausgeführt, welche eine Bewegung des Verstärkungselements 14, 14' und der Trägereinheit 12 während der Wärmebehandlung zulässt, ohne dass die Verbindung gelöst wird. Im vorliegenden Ausführungsbeispiel weist mindestens ein Verstärkungselement 14, 14' der Struktureinheit 10 mindestens eine Versteifungsrippe 14a, 14b, 14c auf, wobei die Verstärkungselemente 14, 14' vorzugsweise über den Strukturschaum 16 und/oder den Klebstoff formschlüssig und/oder kraftschlüssig und/oder stoffschlüssig mit der korrespondierenden Trägereinheit 12 verbunden werden. Als Strukturschaum 16 wird vorzugsweise ein PUR-Strukturschaum eingesetzt. Selbstverständlich können auch Epoxischaum und/oder Metallschaum, wie beispielsweise Aluminiumschaum usw., als Strukturschaum 16 eingesetzt werden. Alternativ zu Strukturschaum 16 kann auch eine auf Kautschukbasis basierende Klebstoffmasse eingesetzt werden.

Auf Grund der verfahrensgünstigen elastischen Eigenschaften der Verbindung werden durch die Wärmebehandlung Eigenspannungen in den Struktureinheiten 10 abgebaut, obwohl die Trägereinheit 12 und/oder die Verstärkungselemente 14, 14' der Struktureinheiten 10 aus unterschiedlichen Werkstoffen und/oder unterschiedlichen Werkstoffkombinationen hergestellt werden und damit unterschiedliche Wärmeausdehnungskoeffizienten aufweisen.

Vorzugsweise bestehen die Werkstoffe und/oder Werkstoffkombinationen aus Metallen und/oder Nichtmetallen, wodurch belastungsspezifische Struktureinheiten 10 mit unterschiedlichen Festigkeitseigenschaften herstellbar sind, welche die Steifigkeit der Tragstruktur des Kraftfahrzeugs wesentlich verbessern können. Bei der Wärmebehandlung handelt es sich beispielsweise um ein als Aushärtungsvorgang in einer kathodischen Tauchlackierung ausgeführtes Verfahren.

### BEZUGSZEICHENLISTE

- 10: Struktureinheit
- 12: Trägereinheit
- 14, 14': Verstärkungselement
- 14a, 14b: Versteifungsrippe
- 16: Strukturschaum
- 18: Türholm/Hohlprofil
- 20: Eckbereich

## Patentansprüche

1. Verfahren zum Verbinden von mindestens zwei Struktureinheiten (10) für eine Karosserie eines Fahrzeugs, welche jeweils mindestens eine als Hohlprofil ausgebildete Trägereinheit (12) mit mindestens einem in der Trägereinheit (12) angeordneten Verstärkungselement (14, 14') umfassen, wobei das jeweilige Verstärkungselement (14, 14') mit Strukturschaum (16) mit der korrespondierenden Trägereinheit (12) verbunden wird, und wobei die Verstärkungselemente (14, 14') der beiden Struktureinheiten (10) jeweils mit einem Fügeabschnitt ausgebildet und miteinander gefügt werden, **dadurch gekennzeichnet, dass** die zu verbindenden Struktureinheiten (10) ausgerichtet und die Verstärkungselemente (14, 14') in den Trägereinheiten (12) vor einer Wärmebehandlung der Struktureinheiten (10) vorfixiert und nach der Wärmebehandlung durch Schäumen und/oder Kleben endgültig fixiert werden.

2. Verfahren nach Anspruch 1, **dadurch gekennzeichnet, dass** die Vorfixierung als mechanische Verhakung und/oder chemische Verbindung ausgeführt wird.

3. Verfahren nach Anspruch 1 oder 2, **dadurch gekennzeichnet, dass** durch die Wärmebehandlung Eigenspannungen in den Struktureinheiten (10) abgebaut werden.

4. Verfahren nach einem der Ansprüche 1 bis 3, **dadurch gekennzeichnet, dass** die Trägereinheit (12) und/oder die Verstärkungselemente (14, 14') der Struktureinheiten (10) aus unterschiedlichen Werkstoffen und/oder unterschiedlichen Werkstoffkombinationen hergestellt werden.

5. Verfahren nach Anspruch 4, **dadurch gekennzeichnet, dass** die Werkstoffe und/oder die Werkstoffkombinationen unterschiedliche Wärmeausdehnungskoeffizienten aufweisen.

6. Verfahren nach Anspruch 4 oder 5, **dadurch gekennzeichnet, dass** die Werkstoffe und/oder Werkstoffkombinationen aus Metallen und/oder Nichtmetallen bestehen.

7. Verfahren nach einem der Ansprüche 1 bis 6, **dadurch gekennzeichnet, dass** die Wärmebehandlung als Aushärtungsvorgang einer kathodischen Tauchlackierung ausgeführt wird.

8. Verfahren nach einem der Ansprüche 1 bis 7, **dadurch gekennzeichnet, dass** mindestens ein Verstärkungselement (14, 14') der Struktureinheiten (10) mindestens eine Versteifungsrippe (14a, 14b, 14c) aufweist.

9. Verfahren nach einem der Ansprüche 1 bis 8, **dadurch gekennzeichnet, dass** die Verstärkungselemente (14, 14') über den Strukturschaum (16) und/oder den Klebstoff formschlüssig und/oder kraftschlüssig und/oder stoffschlüssig mit der korrespondierenden Trägereinheit (12) verbunden werden.

10. Verbindungsanordnung von zwei Struktureinheiten (10) für eine Karosserie eines Fahrzeugs, welche jeweils mindestens eine als Hohlprofil ausgebildete Trägereinheit (12) mit mindestens einem in der Trägereinheit (12) angeordneten Verstärkungselement (14, 14') umfassen, wobei das jeweilige Verstärkungselement (14, 14') mit Strukturschaum (16) mit der korrespondierenden Trägereinheit (12) verbunden ist, und wobei die Verstärkungselemente (14, 14') der beiden Struktureinheiten (10) jeweils mit einem Fügeabschnitt ausgebildet und miteinander gefügt sind, **dadurch gekennzeichnet, dass** die zu verbindenden Struktureinheiten (10) ausgerichtet sind, wobei die Verstärkungselemente (14, 14') in den Trägereinheiten (12) vor einer Wärmebehandlung mechanisch und/oder chemisch vorfixiert und nach der Wärmebehandlung durch Schäumen und/oder Kleben endgültig fixiert sind.

11. Verbindungsanordnung nach Anspruch 10, **dadurch gekennzeichnet, dass** die Trägereinheit (12) zumindest teilweise als geschlossenes Hohlprofil ausgeführt ist.

12. Verbindungsanordnung nach Anspruch 10 oder 11, **dadurch gekennzeichnet, dass** die Vorfixierung durch einen Klebstoff mit hoher Dehnung auf Kautschukbasis erfolgt, welcher die unterschiedlichen Längenausdehnungen der Materialien schadlos übersteht.

13. Verbindungsanordnung nach Anspruch 10 bis 12, **dadurch gekennzeichnet, dass** der Strukturschaum (16) ein PUR-Strukturschaum und/oder ein Epoxischaum und/oder ein Metallschaum ist.

## Claims

1. Method for connecting at least two structural units (10) for a body of a vehicle, which each comprise at least one carrier unit (12) formed as a hollow profile with at least one reinforcement element (14, 14') arranged in the carrier unit (12), wherein each reinforcement element (14, 14') is connected with the respective carrier unit (12) using a structural foam (16), and wherein the reinforcement elements (14, 14') of both structural units (10) are each formed having a joining section and are joined with each other, **characterized in that** the structural units (10) to be connected are oriented and the reinforcement elements (14, 14') in the carrier units (12) are prefixed prior to a heat treatment of the structural units (10) and after the heat treatment are permanently fixed by foaming and/or bonding.

2. Method according to claim 1, **characterized in that** the prefixing is implemented as a mechanical hooking and/or a chemical connection.

3. Method according to claim 1 or 2, **characterized in that** internal stresses in the structural units (10) are reduced by the heat treatment.

4. Method according to any of claims 1 to 3, **characterized in that** the carrier unit (12) and/or the reinforcement elements (14, 14') of the structural units (10) are produced from different materials and/or different material combinations.

5. Method according to claim 4, **characterized in that** the materials and/or the material combinations have different thermal expansion coefficients.

6. Method according to claim 4 or 5, **characterized in that** the materials and/or material combinations consist of metals and/or non-metals.

7. Method according to any of claims 1 to 6, **characterized in that** the heat treatment is performed as a curing process of a cathodic dip-coating.

8. Method according to any of claims 1 to 7, **characterized in that** at least one reinforcement element (14, 14') of the structural units (10) has at least one stiffening rib (14a, 14b, 14c).

9. Method according to any of claims 1 to 8, **characterized in that** the reinforcement elements (14, 14') are connected with the corresponding carrier unit (12) via the structural foam (16) and/or the adhesive in a form fitting and/or force fitting and/or bonded manner.

10. Connection arrangement of two structural units (10) for a body of a vehicle, which each comprise at least one carrier unit (12) formed as a hollow profile with at least one reinforcement element (14, 14') arranged in the carrier unit (12), wherein each reinforcement element (14, 14') is connected with the corresponding carrier unit (12) using a structural foam (16), and wherein the reinforcement elements (14, 14') of both structural units (10) are each formed having a joining section and are joined with each other, **characterized in that** the structural units (10) to be connected are oriented, wherein the reinforcement elements (14, 14') in the carrier units (12) are mechanically and/or chemically prefixed prior to a heat treatment and after the heat treatment are permanently fixed by foaming and/or bonding.

11. Connection arrangement according to claim 10, **characterized in that** the carrier unit (12) is configured at least in part as a closed hollow profile.

12. Connection arrangement according to claim 10 or 11, **characterized in that** the prefixing is implemented by using a rubber-based adhesive having high strain capacity, which withstands different longitudinal elongations of the materials without suffering damage.

13. Connection arrangement according to claim 10 to 12, **characterized in that** the structural foam (16) is a polyurethane structural foam and/or an epoxy foam and/or a metal foam.

## Revendications

1. Procédé pour l'assemblage d'au moins deux unités de structure (10) pour une carrosserie d'un véhicule, lesquelles unités de structure comprennent respectivement au moins une unité porteuse (12) formée sous la forme d'un profilé creux, pourvue d'au moins un élément de renfort (14, 14') disposé dans l'unité porteuse (12), l'élément de renfort (14, 14') respectif étant assemblé par de la mousse structurée (16) à l'unité porteuse (12) correspondante, et les éléments de renfort (14, 14') des deux unités de structure (10) étant réalisés respectivement avec un tronçon de jonction et étant joints les uns aux autres, **caractérisé en ce que** les unités de structure (10) à assembler sont alignées, et les éléments de renfort (14, 14') sont fixés au préalable dans les unités porteuses (12) avant un traitement thermique des unités de structure (10) et sont fixés définitivement par moussage et/ou collage après le traitement thermique.

2. Procédé selon la revendication 1, **caractérisé en ce que** la fixation préalable est configurée sous la forme d'un accrochage mécanique et/ou d'un assemblage chimique.

3. Procédé selon la revendication 1 ou 2, **caractérisé en ce que** des contraintes internes dans les unités de structure (10) sont éliminées par le traitement thermique.

4. Procédé selon l'une quelconque des revendications 1 à 3, **caractérisé en ce que** l'unité porteuse (12) et/ou les éléments de renfort (14, 14') des unités de structure (10) sont fabriqués à partir de matières différentes et/ou à partir de combinaisons de matières différentes.

5. Procédé selon la revendication 4, **caractérisé en ce que** les matières et/ou les combinaisons de matières présentent des coefficients de dilatation thermique différents.

6. Procédé selon la revendication 4 ou 5, **caractérisé en ce que** les matières et/ou les combinaisons de matières sont constituées de métaux et/ou de matériaux non métalliques.

7. Procédé selon l'une quelconque des revendications 1 à 6, **caractérisé en ce que** le traitement thermique est configuré sous la forme d'une opération de durcissement d'un vernissage cathodique par immersion.

8. Procédé selon l'une quelconque des revendications 1 à 7, **caractérisé en ce qu'**au moins un élément de renfort (14, 14') des unités de structure (10) présente au moins une nervure de raidissement (14a, 14b, 14c).

9. Procédé selon l'une quelconque des revendications 1 à 8, **caractérisé en ce que** les éléments de renfort (14, 14') sont assemblés à l'unité porteuse (12) correspondante, par l'intermédiaire de la mousse structurée (16) et/ou de la colle, par complémentarité de forme et/ou à force et/ou par liaison de matière.

10. Assemblage de deux unités de structure (10) pour une carrosserie d'un véhicule, lesquelles unités de structure comprennent respectivement au moins une unité porteuse (12) réalisée sous la forme d'un profilé creux, pourvue d'au moins un élément de renfort (14, 14') disposé dans l'unité porteuse (12), l'élément de renfort (14, 14') respectif étant assemblé par de la mousse structurée (16) à l'unité porteuse (12) correspondante, et les éléments de renfort (14, 14') des deux unités de structure (10) étant réalisés respectivement avec un tronçon de jonction et étant joints les uns aux autres, **caractérisé en ce que** les unités de structure (10) à assembler sont alignées, les éléments de renfort (14, 14') étant fixés au préalable mécaniquement et/ou chimiquement dans les unités porteuses (12) avant un traitement thermique et étant fixés définitivement par moussage et/ou collage après le traitement thermique.

11. Assemblage selon la revendication 10, **caractérisé en ce que** l'unité porteuse (12) est configurée au moins en partie sous la forme d'un profilé creux fermé.

12. Assemblage selon la revendication 10 ou 11, **caractérisé en ce que** la fixation préalable s'effectue par une colle à dilatation élevée à base de caoutchouc, qui supporte sans dommage les différentes dilatations en longueur des matières.

13. Assemblage selon la revendication 10 à 12, **caractérisé en ce que** la mousse structurée (16) est une mousse structurée en polyuréthane et/ou une mousse époxy et/ou une mousse métallique.
